# EUROPEAN PATENT APPLICATION

(11) **EP 4 520 157 A1**
(43) Date of publication of application: **12.03.2025**
(21) Application number: 24382910.8
(22) Date of filing: 14.08.2024
(51) Int. Cl.: A01D 34/01, A01M 21/04

(54) **AGRICULTURAL MACHINE FOR CUTTING AND SHREDDING GRASS USING LASER**

(30) Priority: 07.09.2023 ES 202330751
(71) Applicant: Jove Casanovas, Ramon, 25001 Lleida (ES)
(72) Inventor: Jove Casanovas, Ramon, 25001 Lleida (ES)

(57) **Abstract**

The present application relates to an agricultural machine for grass cutting and shredding using laser technology, wherein the implement comprises a casing and a plurality of laser emitters (12) that are arranged side by side for emitting a laser beam (19) to cut grass stalks. Fore of the emitters in a working direction a resilient flange (17) is arranged to bend the grass stalks appropriately. The application provides a silent, efficient, and pollution-free operation that makes it an attractive option for the agricultural and recreational industries, including grass cleaning on highway medians, road and path embankments, and even grass growing between the tiles on some sidewalks.

## Description

### TECHNICAL FIELD

This innovative machine is designed for use in the agricultural sector, in orchards, recreational areas such as golf courses, large grass surfaces, and service areas such as embankments, roadsides, and highway medians.

### BACKGROUND OF THE INVENTION

Traditional techniques for cutting and shredding grass use brushcutters with blades or chains driven by tractors or other traction machines. This method involves environmental pollution, especially noise, and significant wear on both agricultural machinery and traction machines due to the high effort involved.

Another negative effect of this system is the danger posed when blades hit elements mixed with the grass, causing them to be ejected at high speed. These elements are usually stones and pieces of wood, posing a danger to people within a wide radius. Therefore, it is necessary to prevent people and vehicles from circulating within a large radius while the machine is in operation.

Furthermore, chain choppers attached to tractor power take-offs sometimes compact the soil, negatively affecting the absorption of irrigation and nutrients by the roots of fruit trees.

Additionally, pesticides are sometimes used to suppress weeds, causing environmental and soil contamination that harms crop health.

Existing mounted blade and chain cutters are heavy due to their robustness to withstand the mechanical stress they are subjected to, making them difficult to transport.

### SUMMARY OF THE INVENTION

The proposed laser grass cutter agricultural machine features a sturdy box supported by three height-adjustable swivel wheels. This sturdy box preferably measures 150 cm wide, 25 cm deep, and 30 cm high and is made of durable materials such as metal sheet, polyester, fiberglass, or carbon fiber. Inside this rectangular box are housed the laser heads and control elements necessary for the machine to perform its grass-cutting and shredding function, as explained below.

Optionally, this machine can be equipped with a movable articulated arm about 50 cm long, enabling a cutting width of two meters. This articulated arm, made of the same materials as the main box, is designed to cut and shred grass under tree branches, close to the trunk. Its movement does not require contact with the tree trunk to activate; it will be activated by proximity to the trunk.

In these boxes, both the main 1.5 m box and the movable 0.5 m one, one or more laser emitters are housed, responsible for cutting and shredding the grass as explained below. The lasers are preferably of the optical fiber type with adequate power.

It is crucial that the grass is always cut right after being flattened by a sturdy tab, with the lasers always directed towards the ground. This makes it easy to adjust the focal distance at which the laser develops its full cutting power just when the tab finishes flattening the grass for cutting. This tab will be strong enough to allow grass flattening before cutting and shredding while preventing stones and solid elements from being dragged along.

The laser emitter heads can operate in various ways, protected by the subsequent claims, depending on the grass type, cutting speed required, and other technical and economic factors.
1. One option is for the laser heads to move along one or more parallel guides from side to side of the machine to cover the entire grass surface to be cut and shredded.
2. Another option is for the laser heads to be mounted side by side approximately 20 cm apart, connected by a rod or similar, without moving along the guide and pivoting at a point on the head, thus tracing an arc of about 80 degrees each laterally to cover the full cutting width for which the machine is designed.
3. The laser sweep can also be performed via software, causing the heads to be fixedly screwed to a support while the tip of the heads performs the lateral laser beam sweep with adjustable degrees by the operator through an integrated app on a mobile phone via Bluetooth.

These three laser head options depend on the constant evolution and subsequent cost reduction of these heads, as well as the needs according to the type of grass, grass density, and cutting speed. The manufacturer will decide the most suitable system. The important thing is to cover the entire length to be cut and shredded for which the cutting machine is designed.

If using laser heads moving along one or more guides, this movement will be alternately performed by electric or hydraulic motors, depending on the characteristics of the supporting traction machine and what the manufacturer deems best, as well as the customer's needs.

This versatility in laser head movement ensures the machine can be used on different types of agricultural vehicles, adapting to their specific characteristics, with special care taken to arrange the laser cutting fans to leave no grass sections uncut.

Alternatively, this machine can be mounted on an articulated mechanical arm of a tractor element for cleaning embankments and ditches, preferably along roads or paths, and for cutting grass in highway and motorway medians, thus avoiding the dangers of current methods using blades that raise dust and can project stones or solid elements over long distances.

In the mounted laser cutter machine, the laser beams exit through one or more sufficiently wide slots located at the bottom of the housing, directed towards the ground, efficiently cutting and shredding the grass as the tractor machine flattens it with the sturdy tab and advances in the cutting direction.

It is important to note that before cutting the grass, the machine flattens it with its passage thanks to a resistant material tab located at its bottom or front, in the direction of travel, and in direct contact with the grass. The cut is made right after being flattened.

This feature is fundamental in this patent as it allows the laser beams to be directed towards the ground to cut the previously flattened grass, posing no danger to people near the laser cutter machine while in operation, and by being directed towards the ground, it also ensures efficient and clean cutting.

The laser emitters will preferably attack the ground vertically.

The machine attaches to the tractor or agricultural machine chassis using standard fastening means. Optionally, it will have a third attachment point to allow lifting out of the work area, ensuring a secure and stable connection during use and transportation.

For the operation of the laser emitters, signaling LEDs, and alarm and protection systems, the machine is powered by energy generated alternatively by a suitable current generator to electrically power all these elements. This generator is supplied with the cutter machine and can be coupled to the tractor using a pulley and belt system, gears, or a cardan shaft.

The attached cutter and shredder machine will preferably receive the necessary electrical current for its operation from the generator supplied preferably with the machine.

If the generator is installed in the tractor element, a suitable cable will be provided to deliver the electrical energy to the cutter machine, with a plug adequately protected from moisture and dust.

The laser cutter machine will have safety systems that comply with the regulations of the country where it will be used. Preferably, these systems consist of colored LED indicators located in visible areas of the machine, signaling with red when the laser beams are activated and green when the laser beams are not activated.

Optionally, it will have a system that detects when the machine is not moving or has a significant problem, causing the laser emitters to disconnect and the LEDs to turn from red to flashing green.

The cutter and shredder machine may optionally have an adapter regulator to ensure stable energy supply levels required by the electrical and electronic elements, as well as a small rechargeable battery to maintain the control board programming if the electronic system requires it.

The lateral movement speed of the laser heads, the number of laser heads, the speed of the tractor vehicle, and the laser power preferably determine the grass cutting and shredding dimensions. These variables allow adjusting the cutting and shredding according to the operator's needs and the type of terrain. Optionally, tables will be provided to the operator, showing the tractor speed and laser power required for a specific cut depending on the grass density.

Optionally, the operator of the laser grass cutter and shredder will have a Bluetooth remote control or an app installed on their mobile phone to make on-the-ground adjustments of all necessary variables as the machine performs its work. This flexibility in con FIGUREuration allows optimal adaptation for different working conditions, grass types, and terrain types, thus improving the efficiency and performance of the cutting and shredding process.

The laser machine operates silently, minimizing noise pollution and improving the working environment.

The attached laser grass cutter and shredder machine is designed to optionally be sold disassembled, fully or partially, and transported preferably in a suitable cardboard box, allowing assembly at the site of use by simply screwing each piece in place according to an included plan. This capability allows anyone with basic mechanical knowledge and a few tools, which can optionally be supplied with the cutter machine, to assemble and start it near the work site. These qualities facilitate its transportation and online sales.

The laser heads will preferably be of optical fiber type due to their advantages over other laser types in terms of power, lack of mirror adjustments, and robustness. These types of fiber optic lasers are constantly evolving and can cut new elements that were unthinkable a few years ago. Therefore, when manufacturing the cutter machine, the model that best suits the job's characteristics, price, and reliability should be chosen.

The main advantages of fiber optic lasers are:
Energy and economic savings: The fiber optic laser beam operation method does not require a high electrical energy demand as a laser cutting machine or CNC Plasma does.

Accessible maintenance: A fiber optic laser cutter does not consist of elements requiring costly and complex maintenance or external elements like gas loads or additions: mirrors, crystals, relationships, among others. It only requires simple, more economical maintenance to preserve the machine's optical characteristics.

The laser cutter machine can optionally be mounted in front of machines used to harvest fruit in the field, cutting and shredding grass while personnel harvest fruit from the trees after the laser cutter passes.

Currently, it is necessary to cut the grass first due to the danger it represents for personnel, as elements or stones hit by the blades are ejected, and later harvest the fruit at another time.

This possibility optimizes the work method in fruit harvesting in agricultural fields.

### BRIEF DESCRIPTION OF THE DRAWINGS

To complement the description being made and to assist in a better understanding of the features of the invention, in accordance with a preferred practical embodiment, a set of FIGUREures is included as an integral part of this description, where, for illustrative and non-limiting purposes, the following is represented:
FIGUREure 1
   This drawing depicts the parts that can be attached to the cover of the cutting machine with six 10mm screws each, serving to easily and reliably connect the cutter to the couplings on the tractor machine. The nuts are self-locking to prevent loosening. There are two such parts, preferably made of 4mm thick steel angle with a 40mm flange width.
FIGUREure 2
   This drawing shows a general view where the cutting machine is alternatively attached behind a tractor. It also shows the movable arm. The machine is powered by a tractor element, which can be of various types and can also be positioned at the front of the tractor with suitable universal couplings. The laser-coupled cutting machine has three height-adjustable wheels marked with the number 1. Optionally, the generator marked with the number 4 can be attached to the machine. The number 3 represents the optional cardan to drive the generator shaft. The number 2 designates the steel bars used by tractors to safely attach the implements. Number 7 represents the third point for lifting the machine for transport when not in operation. Number 5 indicates the body of the cutting machine housing the laser heads, the electrical part, and the electronic part. Number 6 shows how to attach the extender arm if optionally installed.
FIGUREure 3
   This FIGUREure shows the top, side, and bottom views in the case of not using a movable element and in the particular case of using only one laser head moving along a guide.
FIGUREure 4
   Here are shown the wheel supports, preferably three, which are preferably attached to the top cover of the cutting machine with brackets fastened with self-locking nuts indicated with the number 35. See the sleeve marked with number 34, which connects the arch of the support, number 15, with the axle, number 14. There are also tubes marked with number 13 that will be placed at the top or bottom of the sleeve to adjust the height of the cutting machine over the ground. Number 14 indicates the rotating piece that connects the wheel to the support attached to the chassis.
FIGUREure 5
   This drawing shows the optional extender or movable arm, number 6. There are also two side covers, number 9, that seal the equipment.
FIGUREure 6
   This drawing shows the con FIGUREuration of the machine equipped with several laser heads that can be fixed or oscillating and cover the total surface to be cut and shredded. If the movable element is equipped, care will be taken to place the laser heads in such a way that no space is left uncut and they slightly overlap.
FIGUREure 7
   This FIGUREure represents the essence of the invention with the flange 17 that bends the grass before cutting it. Number 18 represents the grass to be cut and shredded by the cutting beam. Number 12 is the laser head, and number 19 is the cutting laser beam. The box housing the mechanisms is indicated by number 9.
FIGUREure 8
   This FIGUREure represents one of the three possible arrangements of the laser heads. Number 21 shows how to oscillate the laser heads laterally to cover the entire cutting surface with their sweep. The mechanism, number 24, is simple and similar to the windshield wipers of some vehicles, consisting of a motor reducer connected to a plate on which a rod, number 21, is attached on one side. As piece 23 rotates, it will oscillate the laser heads, number 12, around the axis designated with number 20. The laser beams are designated with number 19.
FIGUREure 9
   This drawing shows the case where the laser heads are fixed and the fan is produced within the laser head itself by software.
FIGUREure 10
   This drawing represents another mode of attachment of the laser head when one or more laser heads move side to side of the cutting machine along one or more guides designated with number 25, driven by a small motor number 36, preferably integrated into the laser head, or by hydraulic elements that allow movement from side to side to cover the entire length of grass to be cut and shredded.

Below is a list of the various elements represented in the FIGUREures that make up the invention:
1 = Wheels supporting the machine
2 = Alternative coupling to the machine's traction element
3 = Optional cardan
4 = Electric generator that can alternatively be installed on the cutting machine or the tractor machine
5 = Top view of the cutting machine with a movable element
6 = Optional movable element
7 = Top cover of the movable element
8 = Bottom view of the machine
9 = Side view of the movable element
10 = Side view of the machine
11 = Passage slot for the laser beam that cuts and shreds the grass
12 = Laser head, preferably of optical fiber
13 = Height adjusting tubes
14 = Axle allowing the wheel to turn
15 = Support connecting the wheel to the machine
16 = Support for fixed lasers
17 = Resistant flange to flatten the grass before cutting
18 = Grass to be cut and shredded after flattening
19 = Laser beam cutting the grass
20 = Bearing or sleeve on which the laser head preferably oscillates
21 = Bar that oscillates the laser heads laterally
22 = Direction of movement of bar 21
23 = Motor with reducer to oscillate bar 21
24 = Eccentric system oscillating bar 21
25 = Axis along which the laser heads move
26 = Cable or control tape for the laser head, same as number 37
27 = Third point to lift the machine
28 = Preferred tractor element
29 = Preferred coupling bracket of the machine to support 2
30 = Coupling pin of the machine to support 2
31 = Set of screws with self-locking nuts
32 = Top view of the interior of the movable element
33 = Coupler for the optional movable element
34 = Sleeve bolted to the wheel support
35 = Brackets securing the wheel support
36 = Motor to move the laser head along the guide
37 = Electrical feed tape for the laser and motor

### PREFERRED EMBODIMENT OF THE INVENTION

To carry out the invention, in the mechanical part, the usual machines available in any implement factory will be used, such as lathes, bending machines, drills, tools for assembly and screwing of parts, punching machines, or metal cutting machines by laser, etc. The electrical part will be carried out by qualified operators with the necessary tools to install the electrical and electronic elements and their connections to the main board where the programming will reside. Other electronic elements needed for operation and alarm control will also need to be installed.

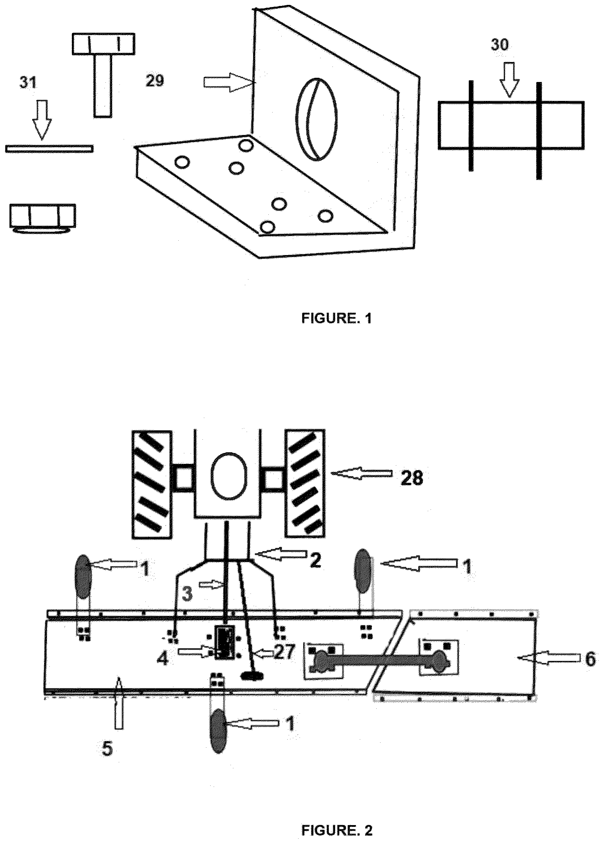

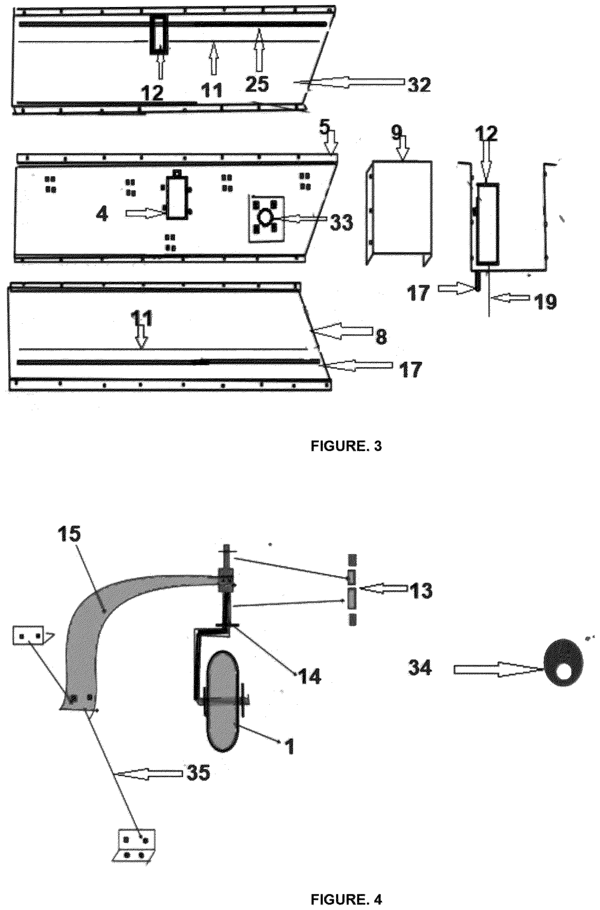

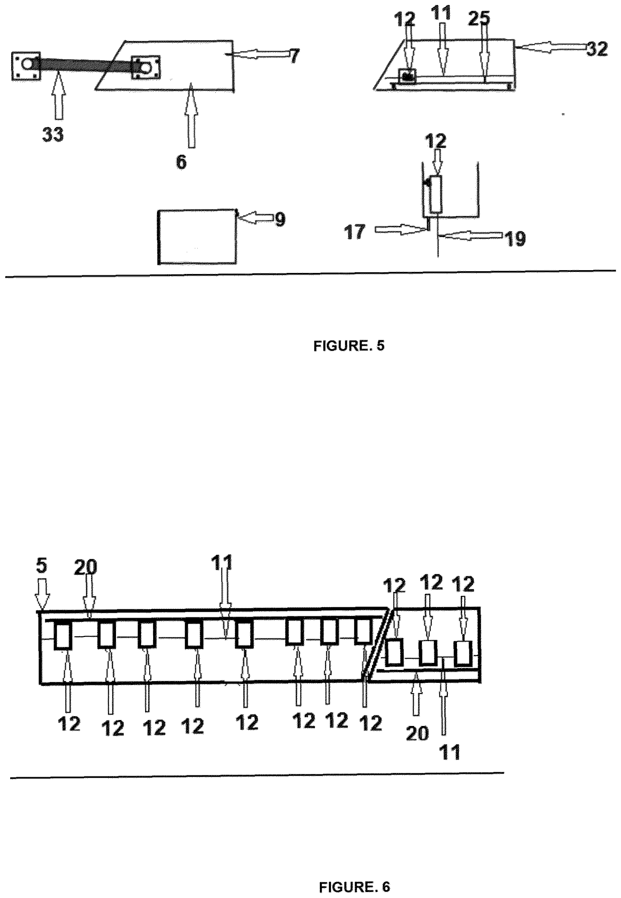

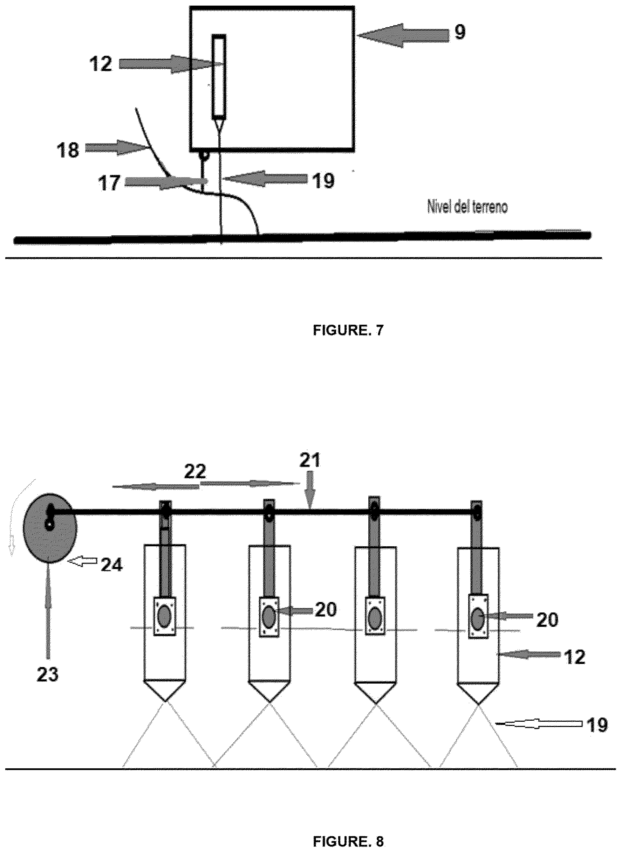

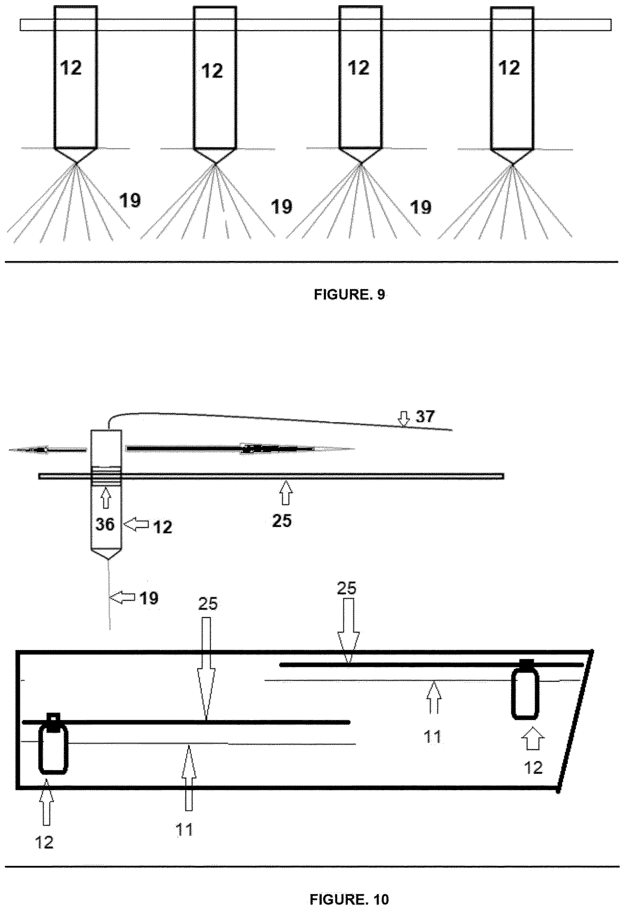

## Claims

1. Agricultural Machine Coupled for Grass Cutting and Shredding Using Laser
Preamble:
The present invention relates to an agricultural machine designed for the efficient management of agricultural fields by cutting and shredding grass using laser technology. The machine is specifically designed to be coupled to different types of tractor elements, regardless of their brand or technical specifications, thereby ensuring optimal versatility in its application. Additionally, it is distinguished by its ability to utilize the energy provided by the tractor for its operation through an integrated electricity generator, thus facilitating efficient and sustainable performance in agricultural tasks.
Characterization:
The agricultural machine subject to this claim is distinguished by several fundamental characteristics that make it unique in its class. Firstly, its design allows for secure coupling to the tractor chassis or any other agricultural machine, using standard fastening means that ensure a stable connection during use and transport. Optionally, a third coupling point is available, facilitating its lifting out of the work area, thus adding greater versatility and convenience in its handling.
A distinctive feature of this machine is its innovative method of pre-preparing the grass before cutting using a laser. Before the laser beams come into action, the grass is subjected to a bending and flattening process by means of a resistant flange, ensuring a uniform and efficient cut of the stalks.
The cutting and shredding process is carried out precisely and effectively. Once the grass is flattened by the flange, the laser beams come into action, cutting the stalks cleanly and effectively. As the machine advances and the laser beams pass successively over the already cut and flattened grass, an integral shredding process occurs, thus ensuring optimal vegetation management.
It is important to note that the laser beams are directed towards the ground, eliminating any risk to the machine operator and nearby personnel, thus ensuring a safe and hazard-free working environment.
Furthermore, the machine is equipped with laser beam generating heads located within it, which operate in three distinct ways, a feature that will be detailed in subsequent claims for appropriate protection.

2. Agricultural machine coupled for grass cutting and shredding using a laser according to claim 1, **characterized by** laser heads that move through one or more parallel guides from side to side until covering the entire surface of grass to be cut and shredded. This method of using the laser heads is what is intended to be protected in this claim.

3. Agricultural machine coupled for grass cutting and shredding using a laser according to claim 1, **characterized by** the laser heads being coupled side by side at an approximate distance of 20 cm, connected with a rod or similar, and without moving along the guide, oscillating around a point on the head tracing an arc of approximately 80 degrees laterally, to collectively cover the entire cutting width for which the machine is designed. This method of using the laser heads is what is intended to be protected in this claim.

4. Agricultural machine coupled for grass cutting and shredding using a laser according to claim 1, **characterized by** the laser heads performing the sweeping motion through software, with the heads fixed and bolted to a support. The outgoing laser beam performs the necessary sweeping motion as programmed, with adjustable degrees set by the operator through an app integrated into a mobile phone and linked to the cutting machine via Bluetooth or Wi-Fi. This method of using the laser heads is what is intended to be protected in this claim.

5. Agricultural machine coupled for grass cutting and shredding using a laser according to claim 1, **characterized by** a resistant flange located at the front or bottom of the machine. This flange forces the grass to bend before proceeding to cut and subsequent shredding. This cutting method after flattening is what is intended to be protected in this claim.
These possible methods of coupling the laser heads within the machine and the pre-cut grass flattening and subsequent shredding are the techniques that are intended to be protected.
